# EUROPÄISCHE PATENTANMELDUNG

(11) **EP 0 831 620 A2**
(43) Veröffentlichungstag der Anmeldung: **25.03.1998**
(21) Anmeldenummer: 97202694.2
(22) Anmeldetag: 02.09.1997
(51) Int. Cl.: H04L 12/28, H04Q 11/04

(54) **Lokales Netzwerk mit zur Funkübertragung vorgesehenen Terminals**

(30) Priorität: 12.09.1996 DE 19637026
(71) Anmelder: Philips Patentverwaltung GmbH, 22335 Hamburg (DE); Philips Electronics N.V., 5621 BA Eindhoven (NL)
(72) Erfinder: Du, Yonggang, Dr.-Ing., Röntgenstrasse 24, 22335 Hamburg (DE)
(74) Vertreter: Volmer, Georg, Dipl.-Ing.

(57) **Zusammenfassung**

Die Erfindung bezieht sich auf ein lokales, nach dem asynchronen Transfermodus arbeitendes Netzwerk mit mehreren Terminals (1 bis 4), die jeweils eine Station (5), eine Funkvorrichtung (7) zur Übertragung von Daten zwischen den Terminals (1 bis 4) und eine Netzwerkschnittstelle (6) mit einer wenigstens zum Verbindungsaufbau vorgesehenen Steueranordnung (8) und mit einer Koppelvorrichtung (9) zur Vermittlung von Zellen zwischen Funkvorrichtung (7), Station (5) und Steueranordnung (8) enthalten. Um eine schnelle Datenübertragung durchführen zu können, sind die Terminals (1 bis 4) jeweils zum direkten Datenaustausch mit einem anderen Terminal (1 bis 4) vorgesehen. Ein Terminal (1 bis 4) ist dabei zur Durchführung von Managmentfunktionen im Netzwerk und zum Austausch von Daten mittels wenigstens einer virtuellen Verbindung zwischen einem lokalen Anwender und einem Anwender eines anderen Terminals (1 bis 4) vorgesehen.

## Beschreibung

Die Erfindung bezieht sich auf ein lokales, nach dem asynchronen Transfermodus arbeitendes Netzwerk mit mehreren Terminals, die jeweils eine Station, eine Funkvorrichtung zur Übertragung von Daten zwischen den Terminals und eine Netzwerkschnittstelle mit einer wenigstens zum Verbindungsaufbau vorgesehenen Steueranordnung und mit einer Koppelvorrichtung zur Vermittlung von Zellen zwischen Funkvorrichtung, Station und Steueranordnung enthalten.

Ein lokales Netzwerk (LAN), welches nach dem asynchronen Transfermodus arbeitet, ist aus der EP 0 660 567 A2 bekannt. Dieses Netzwerk enthält Netzwerkschnittstellen mit einer Funkvorrichtung zur Übertragung von Zellen zwischen den einzelnen Netzwerkschnittstellen. Die Übertragung der Zellen erfolgt nach einem Ringprinzip. Eine Netzwerkschnittstelle übermittelt Zellen immer über den Ring, d.h. immer zu einer benachbarten Netzwerkschnittstelle. Gegebenenfalls müssen die Zellen über mehrere andere Netzwerkschnittstellen zum Bestimmungsort gegeben werden. Zur lastabhängigen Zuweisung von Zeitschlitzen für die Zellübertragung ist ein Verteilmittel vorgesehen, welches den Netzwerkschnittstellen Zeitschlitze zuweist.

Der Erfindung liegt die Aufgabe zugrunde, ein lokales Netzwerk mit einer schnelleren Datenübertragung zu schaffen.

Die Erfindung wird durch ein lokales, nach dem asynchronen Transfermodus arbeitendes Netzwerk der eingangs genannten Art dadurch gelöst,
daß die Terminals jeweils zum direkten Datenaustausch mit einem anderen Terminal vorgesehen sind und
daß ein Terminal zur Durchführung von Managmentfunktionen im Netzwerk und zum Austausch von Daten mittels wenigstens einer virtuellen Verbindung zwischen einem lokalen Anwender und einem Anwender eines anderen Terminals vorgesehen ist.

Erfindungsgemäß findet innerhalb des Netzwerkes ein Datenaustausch direkt zwischen zwei Terminals statt und wird nicht zuvor über weitere dazwischengeschaltete Terminals durchgeführt. Auch ist nicht ein weiteres Schaltelement zur Verteilung der Kanäle vorgesehen. Ein Terminal, das gegebenenfalls immer dynamisch in Abhängigkeit vom jeweiligen Zustand des lokalen Netzwerkes bestimmt wird, führt Managmentfünktionen durch. Eine Managementfunktion ist beispielsweise die Durchführung eines Verbindungsaufbaus- oder abbaus. Es muß hierfür also auch nicht ein Verteilmittel vorhanden sein. Das zur Durchführung von Managementfunktionen vorgesehene Terminal kann auch weiterhin über wenigstens eine virtuelle Verbindung Daten mit einem anderen Terminal austauschen.

Die in einem Terminal zur Funkübertragung anstehenden Zellen (ATM-Zellen) werden mit Steuer- und Zusatzinformationen versehen und als Paketeinheit auf die Funkstrecke gegeben. Hierbei kann eine Paketeinheit einen Teil einer Zelle, eine komplette Zelle oder mehrere Zellen enthalten. Zur Funkübertragung können das TDMA-, das FDMA- oder das CDMA-Verfahren (TDMA = Time Division Multiplex Access; FDMA = Frequency Division Multiplex Access; CDMA = Code Division Multiplex Access) verwendet werden. Die Verfahren können gegebenenfalls auch kombiniert werden.

Die in einer Funkvorrichtung eines Terminals empfangenen Zellen werden in der Koppelvorrichtung zur Station oder zur Steueranordnung weitergeleitet. Hierbei werden Kontrollzellen, die beispielsweise für den Verbindungsaufbau und -abbau zuständig sind, und Anwenderzellen vermittelt, die für eine bestehende Verbindung Anwenderinformationen enthalten. Es stehen also zwei Arten von Zellen zur Verfügung: eine Kontrollzelle und eine Anwenderzelle.

Bei der Erfindung können also mehrere Terminals in einem Funkbereich vorhanden sein. Diese können beliebig, ohne weitere aufwendige Drahtverbindungen zu schaffen, zu- oder abgeschaltet werden, wodurch das lokale Netzwerk für die Anwender flexibel wird. Unter einem Anwender ist z.B. ein Benutzer eines Programms in einem Terminal, ein Programm selber, gespeicherte Daten (Terminal als Datenbank) oder auch ein Fernsprechteilnehmer zu verstehen.

Ein lokales Netzwerk kann mehrere Sub-Netzwerke mit jeweils mehreren Terminals enthalten, um den Funkbereich eines Sub-Netzwerkes zu erweitern. Hierbei ist wenigstens ein Terminal Bestandteil von zwei angrenzenden Sub-Netzwerken und ist zur Übertragung von Zellen zwischen den Sub-Netzwerken vorgesehen.

In der Koppelvorrichtung ist eine einem Ausgangsanschluß der Station zugeordnete erste Empfangsschaltung, welche mit einer ersten Wegespeicheranordnung gekoppelt ist und eine einem Empfangsanschluß der Netzwerkschnittstelle zugeordnete zweite Empfangsschaltung enthalten, welche mit einer zweiten Wegespeicheranordnung gekoppelt ist. Jede Empfangsschaltung ist zur Auswertung des Kopffeldes einer empfangenen Zelle vorgesehen. Zumindestens anhand der aus der Kopfzelle gewonnenen Information ist eine Empfangsschaltung zur Entnahme eines Schaltmodus aus der zugeordneten Wegespeicheranordnung vorgesehen.

In den beiden Wegespeicheranordnungen können für verschiedene virtuelle Verbindungen Schaltmodi gespeichert sein. Für die erste Wegespeicheranordnung sind sechs Schaltmodi vorgesehen. Ein erster Schaltmodus ist für eine Verbindung von der Station zurück zur Station vorgesehen, bei dem die Koppelvorrichtung den Ausgangs- und Eingangsanschluß der Station koppelt. Ein zweiter Schaltmodus ist für eine Verbindung von der Station zurück zur Station und von der Station zu einem anderen Terminal vorgesehen, bei dem die Koppelvorrichtung den Ausgangsanschluß der Station mit dem Eingangsanschluß der Station und mit dem Sendeanschluß der Netzwerkschnittstelle koppelt. Ein dritter Schaltmodus ist für eine Verbindung zwischen der Station und wenigstens einem anderen Terminal vorgesehen, bei dem die Koppelvorrichtung den Ausgangsanschluß der Station mit dem Sendeanschluß der Netzwerkschnittstelle koppelt. Ein vierter Schaltmodus ist für eine Verbindung zwischen der Station und der lokalen Steueranordnung vorgesehen, bei dem die Koppelvorrichtung den Ausgangsanschluß der Station mit der lokalen Steueranordnung koppelt. Ein fünfter Schaltmodus ist für eine Verbindung zwischen der Station und der lokalen und wenigstens einer Steueranordnung eines anderen Terminals vorgesehen, bei dem die Koppelvorrichtung den Ausgangsanschluß der Station mit der lokalen Steueranordnung und dem Sendeanschluß der Netzwerkschnittstelle koppelt. Ein sechster Schaltmodus ist zum Löschen von von der Station eintreffenden Zellen mit nicht vorhandenen Verbindungen vorgesehen.

Für die zweite Wegespeicheranordnung sind drei Schaltmodi vorgesehen. Ein siebter Schaltmodus ist für eine Verbindung von der Funkschnittstelle zur Station vorgesehen, bei dem die Koppelvorrichtung den Empfangsanschluß der Netzwerkschnittstelle mit dem Eingangsanschluß der Station koppelt. Ein achter Schaltmodus ist für eine Verbindung zwischen der Funkschnittstelle und der lokalen Steueranordnung vorgesehen, bei dem die Koppelvorrichtung den Empfangsanschluß der Netzwerkschnittstelle mit der lokalen Steueranordnung koppelt. Ein neunter Schaltmodus ist zum Löschen von von dem Empfangsanschluß der Netzwerkschnittstelle eintreffenden Zellen mit nicht vorhandenen Verbindungen vorgesehen.

Die zweite Wegespeicheranordnung in einem Terminal, welches Bestandteil von wenigstens zwei angrenzenden Sub-Netzwerken ist, ist zusätzlich zur Speicherung eines zehnten Schaltmodus für eine Verbindung zwischen einem Terminal eines ersten Sub-Netzwerkes und einem Terminal eines zweiten Sub-Netzwerkes vorgesehen, bei dem die Koppelvorrichtung den Empfangs- und Sendeanschluß der Netzwerkschnittstelle koppelt.

Die Schaltmodi für eine virtuelle Verbindung werden während des Verbindungsaufbaus festgelegt. Die Speicherung eines Schaltmodus für eine virtuelle Verbindung in einer Wegespeicheranordnung führt die entsprechende Steueranordnung durch. Die Wegespeicheranordnung ist dabei zur Speicherung der Verbindungsart, des Zelltyps und des Schaltmodus unter der Kennzeichnung für eine virtuelle Verbindung vorgesehen. Eine virtuelle Verbindung kennzeichnen zusammen die im Kopffeld einer Zelle enthaltenen VCI (virtual channel identifier) und VPI (virtual path identifier). Die Art der Verbindung gibt an, ob eine Einzel-Verbindung (unicast connection) bzw. Punkt-zu-Punkt-Verbindung, eine Mehrfach-Verbindung (multicast connection) bzw. Punkt-zu-Multipunkt-Verbindung oder Verteil-Verbindung (broadcast connection) vorliegt.

Ein Terminal enthält eine Funkvorrichtung mit einer Hochfrequenzschaltung, einem Modem und einer Protokollvorrichtung. Die Funkvorrichtungen von zwei Terminals sind zum Austausch von Daten vorgesehen. Hierbei überträgt ein Terminal Identifikationsdaten über einen Registrierungskanal, MAC-Signalisierungsdaten (MAC = medium access control) über einen MAC-Signalisierungskanal und Nutzinformationen über wenigstens einen Transportkanal. Die Nutzinformationen enthalten wenigstens einen Teil einer Zelle. Über den MAC-Signalisierungskanal werden einem Terminal von dem zur Durchführung von Managementfunktionen vorgesehenen Terminal beispielsweise die für die Übertragung von Nutzinformationen zuständigen Transportkanäle mitgeteilt. Also ist das zur Durchführung von Managementfunktionen vorgesehene Terminal zur Steuerung des Verbindungsaufbaus und -abbaus und zur dynamischen Zuweisung von Transportkanälen für die einzelnen Terminals vorgesehen.

Die Erfindung bezieht sich auch auf ein Terminal für ein lokales, nach dem asynchronen Transfermodus arbeitendes Netzwerk mit mehreren weiteren Terminals, das eine Station, eine Funkvorrichtung zur Übertragung von Daten mit anderen Terminals und eine Netzwerkschnittstelle mit einer wenigstens zum Verbindungsaufbau vorgesehenen Steueranordnung und mit einer Koppelvorrichtung zur Vermittlung von Zellen zwischen Funkvorrichtung, Station und Steueranordnung enthält. Das Terminals ist zum direkten Datenaustausch mit einem anderen Terminal vorgesehen und dient zur Durchführung von Managmentfunktionen im Netzwerk und zum Austausch von Daten mittels wenigstens einer virtuellen Verbindung zwischen einem eigenen Anwender und einem Anwender eines anderen Terminals.

Ausführungsbeispiele der Erfindung werden nachstehend anhand der Figuren näher erläutert. Es zeigen:
- Fig. 1: ein lokales Netzwerk aus über Funkstrecken kommunizierende Terminals,
- Fig. 2: ein Blockschaltbild eines im lokalen Netzwerk nach Fig. 1 verwendbaren Terminals,
- Fig. 3: ein Blockschaltbild einer in einem Terminal nach Fig. 2 verwendbaren Funkvorrichtung,
- Fig. 4, 5, 7: verschiedene Schaltmodi einer in einem Terminal nach Fig. 2 enthaltenen Netzwerkschnittstelle und
- Fig. 6: ein lokales Netzwerk aus über Funkstrecken kommunizierende Terminals mit drei Sub-Netzwerken.

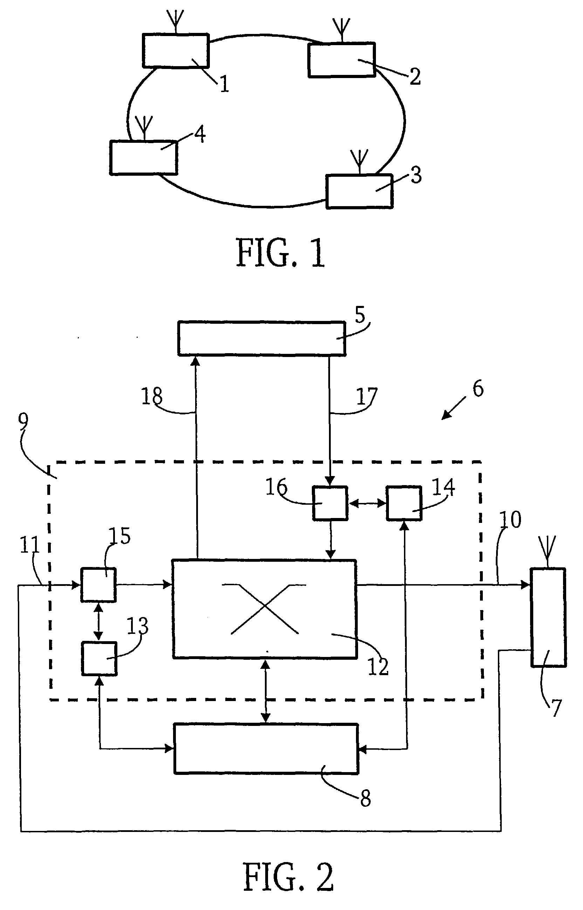

In Fig. 1 ist ein Ausführungsbeispiel eines lokalen Netzwerkes mit 4 Terminals 1 bis 4 dargestellt, die über Funkstrecken jeweils Daten austauschen. Die in Fig. 1 eingezeichnete und die Terminals 1 bis 4 umfassende Ellipse soll den Funkbereich angeben, in dem zwischen zwei Terminals (1 bis 4) eine problemlose Funkübertragung möglich ist.

Eine Terminal 1 bis 4 nach Fig. 1, welches eine Station 5, eine Netzwerkschnittstelle 6 und eine Funkvorrichtung 7 enthält, ist in der Fig. 2 detaillierter dargestellt. Die Station 5 kann beispielsweise ein Bildfernsprecher, ein Personal-Computer, eine Workstation oder ein Fernsprecher sein. Die Netzwerkschnittstelle 6 enthält eine Steueranordnung 8 und eine Koppelvorrichtung 9, die über einen Sendeanschluß 10 und einen Empfangsanschluß 11 mit der Funkvorrichtung 7 gekoppelt ist und nach dem asynchronen Transfermodus erzeugte Zellen vermittelt.

Eine Zelle enthält ein Kopffeld mit beispielsweise 5 Byte und ein Informationsfeld mit beispielsweise 48 Byte. Die im Kopffeld der Zelle enthaltenen Informationen dienen insbesondere zur Adressierung und zur Durchführung von Vermittlungsfunktionen.

Zellen können entweder von der Steueranordnung 8 oder der Station 5 erzeugt werden und von der Funkvorrichtung 7 über die Funkstrecke empfangen werden. Die Steueranordnung 8, die als Mikroprozessor realisiert sein kann, dient beispielsweise zum Aufbau und -abbau von virtuellen Verbindungen, z.B. zwischen zwei Anwendern verschiedener Terminals.

In der Koppelvorrichtung 9 ist noch ein Koppelfeld 12, zwei Wegespeicheranordnungen 13 und 14 und zwei Empfangsschaltungen 15 und 16 enthalten. Die Empfangsschaltung 15 ist mit dem Empfangsanschluß 11, mit einem Eingang des Koppelfeldes 12 und mit der Wegespeicheranordnung 13 verbunden. Ein Ausgang des Koppelfeldes 12 ist an den Sendeanschluß 10 angeschlossen. Zwischen einem Ausgangsanschluß 17 der Station 5 und einem weiteren Eingang des Koppelfeldes 12 ist die Empfangsschaltung 16 angeordnet, welche mit der Wegespeicheranordnung 14 gekoppelt ist. Ein Eingangsanschluß 18 der Station ist noch mit einem weiteren Ausgang des Koppelfeldes verbunden.

In den Empfangsschaltungen 15 und 16 werden jeweils die Kopffelder der über den Empfangsanschluß 11 und den Ausgangsanschluß 17 ankommenden Zellen ausgewertet. Im Kopffeld enthaltene Adresseninformationen werden zur Ansteuerung verschiedener Tabellen für die mit den Empfangsschaltungen 15 und 16 verbundenen Wegespeicheranordnungen 13 und 14 verwendet. Die in den Tabellen abgelegten Daten werden jeweils von den Empfangsschaltungen 15 und 16 verwendet, um die weitere Verarbeitung und Weiterleitung der Zelle zu organisieren. Beispielsweise kann die Empfangsschaltung 16 eine Zelle kopieren und mit neuen Adresseninformationen versehen. Die Originalzelle wird z.B. über das Koppelfeld 12 an die Funkvorrichtung 7 und die kopierte Zelle über das Koppelfeld 12 an die Station 5 zurückgegeben. Es besteht noch die Möglichkeit, daß das Koppelfeld 12 solche Funktionen wie diese Kopierfunktion durchführt. Die Empfangsschaltung 15 leitet von der Funkvorrichtung 7 empfangene Zellen zum Koppelfeld 12 weiter.

In der Koppelvorrichtung 9 werden zwei Arten von Nutzzellen übertragen. Einerseits Anwenderzellen (user cells), die in ihrem Informationsfeld z. B. Nachrichten oder Daten des Benutzers einer zuvor aufgebauten Verbindung enthalten und andererseits Kontrollzellen (signalling cells), die in ihrem Informationsfeld Steuerungsinformationen enthalten.

Bestimmte Bits im Kopffeld einer Zelle sind für den VCI (virtual channel identifier) und für den VPI (virtual path identifier) reserviert. Der VPI gibt ein Bündel mehrerer virtueller Verbindungen an. Für den VPI sind im Kopffeld der Zelle nach derzeitigen Normungsbestimmungen 8 Bit und für den VCI 16 Bit vorgesehen.

Bei diesem Ausführungsbeispiel kennzeichnen der VPI und der VCI zusammen eine virtuelle Verbindung zwischen mindestens zwei Anwendern durch eine Nummer und werden während des Verbindungsaufbaus jeweils festgelegt. Unter einem Anwender ist z.B. ein Benutzer eines Programms in einem Personal-Computer, ein Programm selber, gespeicherte Daten (Station als Datenbank) oder auch ein Fernsprechteilnehmer zu verstehen. Zusätzlich gibt der VPI noch ein Bündel von virtuellen Verbindungen an. Beim Verbindungsaufbau werden bestimmte Attribute, die den durch VPI und VCI gekennzeichneten Verbindungen zugeordnet sind, in den Tabellen der Wegespeicheranordnungen 13 und 14 gespeichert. Ein Attribut gibt beispielsweise die Verbindungsart einer virtuellen Verbindung an.

Unter einer Verbindungsart ist eine Einzel-Verbindung (unicast connection), eine Mehrfach-Verbindung (multicast connection) oder eine Verteil-Verbindung (broadcast connection) zu verstehen. Bei einer Einzel-Verbindung oder Ende-zu-Ende-Verbindung besteht eine virtuelle Verbindung eines Anwenders eines ersten Terminals mit einem Anwender eines zweiten Terminals. Bei einer Mehrfach-Verbindung oder Punkt-zu-Multipunkt-Verbindung sind mehrere Anwender von Terminals miteinander verbunden. Bei einer Verteil-Verbindung liefert eine Sendeterminal an alle anderen Terminals Zellen mit gleichem Inhalt im Informationsfeld.

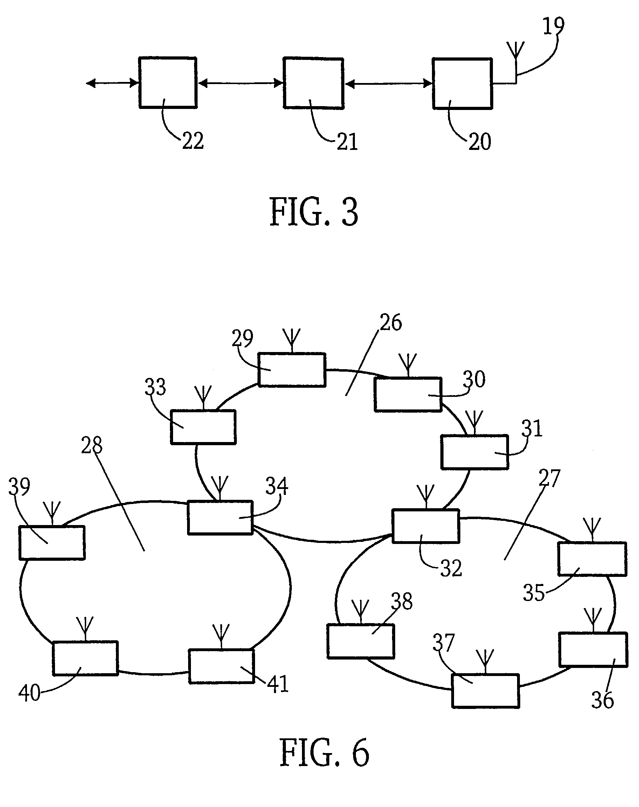

Die Funkvorrichtung 7 in einem Terminal 1 bis 4 enthält eine Antenne 19, eine Hochfrequenzschaltung 20, ein Modem 21 und eine Protokollvorrichtung 22 (Fig. 3). Außer der Protokollvorrichtung 22 benötigen die anderen Schaltelemente 19 bis 21 der Funkvorrichtung 7 keine weitere Erläuterung, da diese aus anderen Funkvorrichtungen bekannte Schaltungselemente sind. Die Protokollvorrichtung 22 bildet aus dem empfangenen ATM-Zellenstrom Paketeinheiten, welche jeweils zumindestens Teile einer ATM-Zelle und Steuerinformationen enthalten, und wendet hierbei die für den Mehrfachzugriff in einem Funkübertragungsmedium geeigneten und fehlerreduzierenden Protokolle an. Diese Protokolle beziehen sich auf das OSI-Schichtenmodell. Hierbei ist die Sicherungsschicht des OSI-Schichtenmodelles relevant. Diese enthält wenigstens zwei weitere Teilschichten: LLC- und MAC-Schicht. Die MAC-Schicht steuert den Mehrfachzugriff der Terminals zum Übertragungsmedium (Funkübertragungsmedium). Die LLC-Schicht (LLC = Logical Link Control) führt eine Fluß- und Fehlerkontrolle durch. Zur MAC- und LLC-Schicht kann weiteres beispielsweise dem Buch "Computer Networks" von Andrew S. Tanenbaum, Second Edition, Prentice-Hall International, Inc., 1988, Seiten 117 bis 131, 196 bis 212 und 262 bis 265 entnommen werden.

Die Funkübertragung zwischen den Terminal 1 bis 4 kann nach einem TDMA-, FDMA- oder CDMA-Verfahren (TDMA = Time Division Multiplex Access; FDMA = Frequency Division Multiplex Access; CDMA = Code Division Multiplex Access) durchgeführt werden. Die Verfahren können gegebenenfalls auch kombiniert werden. Beispielsweise ist ein Zeitschlitz eines Rahmens nach dem TDMA-Verfahren für eine bestimmte Verbindung einem Terminal zugeordnet. Die Dauer eines Zeitschlitzes könnte einem ganzzahligen Teil oder der Dauer einer oder einem Vielfachen einer Zelle und zusätzlichen für die Funkübertragung notwendigen Steuer- und Zusatzinformationen entsprechen. Die Zuordnung eines Zeitschlitzes für eine Verbindung wird z.B. vor der Übertragung eines Rahmens in Abhängigkeit von den Anforderungen der betroffenen Terminals festgelegt.

Im folgenden sei vorausgesetzt, daß der Datenaustausch zwischen den Terminals 1 bis 4 nach dem TDMA-Verfahren (Zeitmultiplexverfahren) auf dem Funkübertragungsweg durchgeführt wird. Für die Übertragung von Daten zwischen zwei Terminals (1 bis 4) werden durch das der MAC-Schicht zugehörige Protokoll zugewiesene Zeitschlitze verwendet (TDMA). Ein Rahmen enthält einen kollisionsbehafteten Kanal oder Zeitschlitz (im folgenden als Registrierungskanal bezeichnet), mehrere kollisionsfreie MAC-Signalisierungskanäle- oder zeitschlitze und Transportkanäle oder -zeitschlitze für Nutzinformationen. Auf den Registrierungskanal kann jedes Terminal zugreifen, wodurch Kollisionen mit anderen Terminals entstehen können. Über den Registrierungskanal läßt sich ein Terminal nach dem Einschalten bei dem Terminal registrieren, welches für das lokale Netzwerk die Managementfunktion durchführt. Dieses Terminal, dessen Steueranordnung 8 für das Management zuständig ist, wird im folgenden als Controller bezeichnet.

Ein MAC-Signalisierungskanal ist einem Terminal fest zugeordnet und dient dazu, die MAC-Steuerungsinformationen zwischen dem Terminal und dem Controller auszutauschen. Die MAC-Steuerungsinformationen entstammen dem zur MAC-Schicht zugehörigem Protokoll und dienen z.B. zur dynamischen Reservierung der Transportzeitschlitze für die Nutzinformation. Hierbei teilt das jeweilige Terminal dem Controller mit, wieviele Zellen jeweils in einem Puffer zur Übertragung bereitstehen. Der Controller weist z.B. in Abhängigkeit des Pufferfüllstandes von zur Übertragung anstehenden Zellen der im gesamten Funkbereich liegenden Terminals die Tranportkanäle den einzelnen Terminals zu. Hierbei wird die Zuweisung in der Regel vor jedem neuen Zeitrahmen erneuert. Auch die Zuweisung für die gesamten Transportkanäle kann dynamisch erfolgen. Das bedeutet, daß bei einem ersten Rahmen mehr Kanäle für die Übertragung vom Terminal 1 zum Terminal 3 als Kanäle für die Übertragung von dem Terminal 2 zum Terminal 1 und bei einem anderen Rahmen mehr Kanäle für den Transport der Zellen vom Terminal 2 zum Terminal 1 als Kanäle für die Übertragung vom Terminal 1 zum Terminal 3 vom Controller vergeben worden sind. Ein Verfahren für eine MAC-Signalisierung kann z.B. der Veröffentlichung "Medium Access Control Protocol for wireless, transparent ATM access" von D. Petras, IEEE Wireless Communication Systems Symposium, Long Island, NY, Seiten 79 bis 84, November 1995 entnommen werden.

In dem lokalen Netzwerk nach Fig. 1 kann beispielsweise durch einen dynamischen in den jeweiligen Terminals (1 bis 4) verteilten Algorithmus entschieden werden, daß das Terminal 1 der Controller. Der Controller kann während eines Rahmens z.B. dem Terminal 2 einen ersten Transportzeitschlitz oder -kanal für die Übertragung von Daten zum Terminal 3, den zweiten Transportkanal dem Terminal 3 zur Übertragung von Daten zum Terminal 1, den dritten Transportkanal wieder dem Terminal 3 zur Übertragung von Daten zum Terminal 1, den vierten Transportkanal dem Terminal 1 zur Übertragung von Daten zum Terminal 4, dem fünften Transportkanal dem Terminal 4 zur Übertragung von Daten zum Terminal 2 usw. zur Verfügung stellen. Der Controller kann nach Empfang aller MAC-Signalisierungsinformationen einen Optimierungsprozeß durchführen, um im Mittel jedem Terminal eine optimale Anzahl an Transportkanälen zur Verfügung zu stellen.

Weiter dient der Controller auch dazu, einen Verbindungsaufbau- und abbau durchzuführen. Bevor eine Verbindung aufgebaut werden kann muß ein Terminal beim Controller angemeldet werden. Hierbei sendet ein Terminals nach dem Inbetriebsetzen dem Controller einen Registrierungswunsch mit der dem Terminal zugeordneten Identifikationsnummer (ID-Nummer) über den Registrierungskanal. Der Registrierungswunsch wird nach Empfang in der Funkvorrichtung 7 des Controllers von der Koppelvorrichtung 9 nach Befragen der Wegespeicheranordnung 13 zur Steueranordnung 8 gesendet. Der Controller legt die Identifikationsnummer des Terminals in z.B. in einer mit der Steueranordnung gekoppelten Datenbank ab. Der Empfang im Controller wird durch eine zum Terminal gesendete Quittierungsmeldung bestätigt. Außer der Quittierungsmeldung bekommt das Terminal auch die Angabe über den zugewiesenen MAC-Signalisierungskanal mitgeteilt.

Im folgenden soll beispielhaft der Verbindungsaufbau zwischen zwei Anwendern von Terminals beschrieben werden. Das Terminal 2 mit einem Anwender A₁ möchte mit einem Anwender A₂ des Terminals 4 eine Verbindung aufbauen. Der Controller ist das Terminal 1. Hierbei wird vorausgesetzt, daß mittels der MAC-Signalisierung der Austausch von ATM-Zellen (Anwender- und Kontrollzellen) über die direkte Funkstrecke zwischen zwei Terminals realisiert wird. Die Schaltungsanordnungen der MAC-Schicht ermöglichen unabhängig vom Inhalt der ATM-Zellen die oben genannte dynamische Zeitschlitzzuweisung.

Von dem Terminal 2 werden zuerst Kontrollzellen mit einem Verbindungswunsch erzeugt und zum Controller übertragen. Die Steueranordnung 8 des Controllers erhält Kontrollzellen mit einem Verbindungswunsch und prüft dann, ob eine solche Verbindung möglich ist (z.B. wird geprüft, ob Terminal 4 registriert ist). Wenn die Verbindung erlaubt ist, wird dieser virtuellen Verbindung ein gültiger VPI und VCI zugewiesen. Mittels Kontrollzellen teilt der Controller den Steueranordnungen 8 der Terminals 2 und 4 mit, daß eine virtuelle Verbindung aufgebaut ist. Dabei werden auch die der jeweiligen logischen Schnittstelle (UNI = user network interface) zwischen Station 5 und Netzwerkschnittstelle 6 zugeordneten VPI und VCI, welche die jeweilige Station benutzt, mitgeteilt. Die Steueranordnung 8 des Controllers hat zuvor geprüft, ob für die virtuelle Verbindung genügend Übertragungskapazität über die Funkstrecke vorhanden ist. Es muß für die Funkstrecke dabei für eine Verbindung eine genügende Übertragungskapazität im Durchschnitt zur Verfügung stehen. Diese kann jedoch während der Funkübertragung von Rahmen zu Rahmen variieren. Zuständig für die dynamische Zeitschlitzzuordnung während der Funkübertragung ist die Steueranordnung 8 des Controllers. Weiter teilt der Controller den Terminals 2 und 4 die von Ihnen jeweils für die Funkstrecke vorgesehenen VPI und VCI für die Verbindung mit. Es können also der Funkstrecke und der jeweiligen logischen Schnittstelle (UNI) zwischen Station 5 und Netzwerkschnittstelle 6 auf ATM-Ebene (Zellstromebene) unterschiedliche, aber korrespondierende VPI und VCI zugewiesen werden.

In den Netzwerkschnittstellen 6 der Terminals 2 und 4 müssen Tabellen in bestimmten Wegespeicheranordnungen noch verändert werden. Hierbei wird ein bestimmter Schaltmodus für den VPI und VCI der logischen Schnittstelle (UNI) zwischen Station 5 und Netzwerkschnittstelle 6 in den Tabellen eingestellt. Diese Tabellenänderung wird über Kontrollzellen angestoßen, die vom Controller ausgesendet werden und von den Steueranordnungen 8 der Terminals 2 und 4 empfangen und ausgewertet werden. Die eigentliche Tabellenänderung führt die Steueranordnung 8 jeder Netzwerkschnittstelle 6 in den Terminals 2 und 4 durch. Hierbei werden in die Wegespeicheranordnung 13 die der Funkstrecke zugeordneten VPI und VCI und in die Wegespeicheranordnung 14 die einer logischen Schnittstelle (UNI) zwischen Station 5 und Netzwerkschnittstelle 6 zugeordneten VPI und VCI abgelegt.

Beispielsweise leitet die Netzwerkschnittstelle 6 eines Terminals die von einer zugeordneten Station 5 ausgesendete Zelle an seinen entsprechenden Sendeanschluß 10 weiter. Den eigentlichen Schaltvorgang führt dabei das Koppelfeld 12 der Koppelvorrichtung 9 durch, die nach Auswertung der Tabelle in der Wegespeicheranordnung 14 den empfangenen Zellstrom entsprechend weiterleitet.

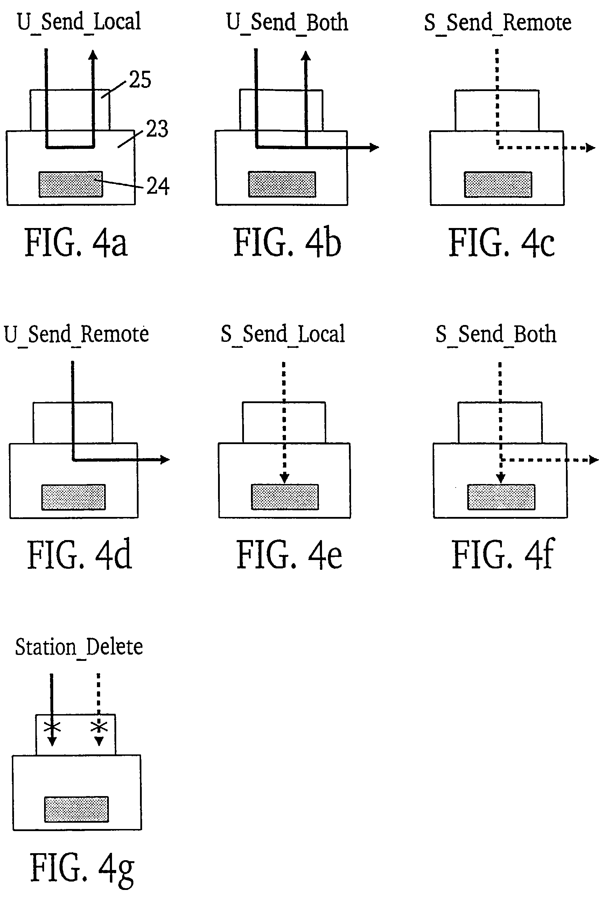

Für die unterschiedlichen Verbindungsarten, den Empfänger von Zellen und den VPI und VCI sind in den Wegespeicheranordnungen 13 und 14 verschiedene Schaltmodi gespeichert. In Fig. 4a bis 4g sind die verschiedenen Schaltmodi, die in der Wegespeicheranordnung 14 ablegbar sind, skizziert. Der Zellstrom, der sich auf Anwenderzellen bezieht, ist mit einer durchgezogenen Linie, und der Zellstrom, der sich auf Kontrollzellen bezieht, ist mit einer unterbrochenen Linie eingezeichnet. In Fig. 4a sind exemplarisch die Netzwerkschnittstelle mit dem Bezugszeichen 23, die darin enthaltene Steueranordnung mit dem Bezugszeichen 24 und die Station mit dem Bezugszeichen 25 versehen.

Fig. 4a zeigt den Schaltmodus "U_Send_Local", bei dem Anwenderzellen von einer Station gesendet worden sind und die über die Koppelvorrichtung 24 zurück zur Station gegeben werden. Dieser Schaltmodus wird für alle Anwenderzellen von Punkt-zu-Punkt- und Punkt-zu-Multipunkt-Verbindungen verwendet, bei welcher die empfangende Station gleich der sendenden Station ist.

Beim Schaltmodus "U_Send_Both" gemäß Fig. 4b werden von der Station Anwenderzellen gesendet, die zur Station zurückgeliefert werden und zu einem anderen Terminal über die Funkschnittstelle gesendet werden. Als Funkschnittstelle soll im folgenden allgemein die Funkstrecke mit den jeweiligen zuständigen Funkvorrichtungen 7 von zwei Terminals bezeichnet werden. Dieser Schaltmodus wird für Anwenderzellen bei Punkt-zu-Multipunkt- und bei Verteil-Verbindungen verwendet. Zur Punkt-zu-Multipunkt-Verbindung ist zu erwähnen, daß die sendende Station auch die empfangende Station und wenigstens eine weitere Station eines anderen Terminals eine empfangende Station ist.

Kontrollzellen, die von der Station zu wenigstens einem anderen Terminal gesendet werden, werden nach dem Schaltmodus "S_Send_Remote" gemäß Fig. 4c von der Koppelvorrichtung 9 zu dem Sendeanschluß 10 gegeben. Dieser Schaltmodus wird für Kontrollzellen einer Punkt-zu-Punkt-Verbindung verwendet, bei dem eine Steueranordnung 8 eines anderen Terminals der Empfänger der Kontrollzellen ist. Auch bei einer Punkt-zu-Mehrpunkt-Verbindung, bei der verschiedene Steueranordnungen 8 anderer Terminals die Empfänger sind, ist der Schaltmodus "S_Send_Remote" vorgesehen.

Fig. 4d zeigt den Schaltmodus U_Send_Remote, der bewirkt, daß Anwenderzellen von der Station zum Sendeanschluß gegeben werden. Dieser Schaltmodus wird für Anwenderzellen bei Punkt-zu-Punkt- oder einer Punkt-zu-Multipunkt-Verbindung verwendet. Bei beiden Verbindungsarten sind die Empfänger andere Terminals.

Die Fig. 4e und 4f betreffen Schaltmodi von Kontrollzellen, welche von der Station gesendet werden. Beim Schaltmodus "S_Send_Local" gemäß Fig. 4e werden alle empfangenen Kontrollzellen einer Punkt-zu-Punkt- oder Punkt-zu-Multipunkt-Verbindung zur Steueranordnung 8 der Netzwerkschnittstelle geleitet, die mit der sendenden Station verbunden ist (lokale Steueranordnung). Der Schaltmodus "S_Send_Both" gemäß Fig. 4f wird bei Punkt-zu-Multipunkt- oder Verteil-Verbindungen angewendet. Dabei werden die Kontrollzellen zur lokalen Steueranordnung 8 und zu Steueranordnungen 8 der Netzwerkschnittstellen anderer Terminals geleitet.

Beim Schaltmodus "Delete" gemäß Fig. 4g werden Anwender- oder Kontrollzellen in der Koppelvorrichtung 24 gelöscht, wenn diese nicht zu anderen Terminals oder zurück zur Station oder zur lokalen Steueranordnung gelangen sollen.

Die in der Wegespeicheranordnung 14 befindliche Tabelle kann nun die folgenden Einträge aufweisen:

| Empfangsort des/der Anwender | Verbindungsart | Schaltmodus |
|---|---|---|
| Station | Unicast/Anwenderzelle | U_Send_Local |
| Station | Multicast/Anwenderzelle | U_Send_Local |
| anderes Terminal | Unicast/Anwenderzelle | U_Send_Remote |
| andere(s) Terminal(s) | Multicast/Anwenderzelle | U_Send_Remote |
| Station und wenigstens ein anderes Terminal | Multicast/Anwenderzelle | U_Send_Both |
| irrelevant | Broadcast/Anwenderzelle | U_Send_Both |
| lokale Steueranordnung | Unicast/Kontrollzelle | S_Send_Local |
| lokale Steueranordnung | Multicast/Kontrollzelle | S_Send_Local |
| andere Steueranordnung | Unicast/Kontrollzelle | S_Send_Remote |
| andere Steueranordnungen | Multicast/Kontrollzelle | S_Send_Remote |
| lokale Steueranordnung und wenigstens eine andere Steueranordnung | Multicast/Kontrollzelle | S_Send_Both |
| irrelevant | Broadcast/Kontrollzelle | S_Send_Both |
| irrelevant | alle nicht vorhandenen Verbindungen | Station_Delete |

Die Tabelle weist außerdem hier nicht dargestellte VPI- und VCI-Einträge auf. So kann beispielsweise unter einem ersten VPI- und VCI-Eintrag als Empfangsort ein Anwender eines anderen Terminals, als Verbindungsart eine Unicast- oder Punkt-zu-Punkt-Verbindung für eine Anwenderzelle und als Schaltmodus "U_Send_Remote" aufgeführt sein. Weiter können unter einem VPI- und VCI-Eintrag als Empfangsort mehrere Anwender der lokalen Steueranordnung, als Verbindungsart eine Multicast- oder Punkt-zu-Multipunkt-Verbindung für eine Kontrollzelle und als Schaltmodus "S_Send_Local" eingetragen sein. Es sei hier noch bemerkt, daß für den Verbindungsaufbau und -abbau für die Kontrollzellen bestimmte vorgegebene VCI- und VPI-Kombinationen reserviert sind.

Die Tabelle gibt für alle vorkommenden Empfangsorte und Verbindungsarten der Zellen, die von der Station eintreffen, den Schaltmodus an. Die lokale Steueranordnung ist die Steueranordnung 8 der mit der sendenden Station gekoppelten Netzwerkschnittstelle und eine entfernte Steueranordnung eine Steueranordnung 8 der Netzwerkschnittstelle eines anderen Terminals. Es kann noch vorkommen, daß beispielsweise eine Zelle mit einem eine Broadcast- oder Verteil-Verbindung kennzeichnenden VPI und VCI empfangen wird. In diesem Fall wird unabhängig von dem Empfangsort bei einer Anwender- und Kontrollzelle der Schaltmodus "U_Send_Both" bzw. "S_Send_Both" verwendet. Für alle nicht vorhandenen Verbindungen mit einem irrelevanten Empfangsort werden die Zellen gelöscht (Schaltmodus: "Station_Delete").

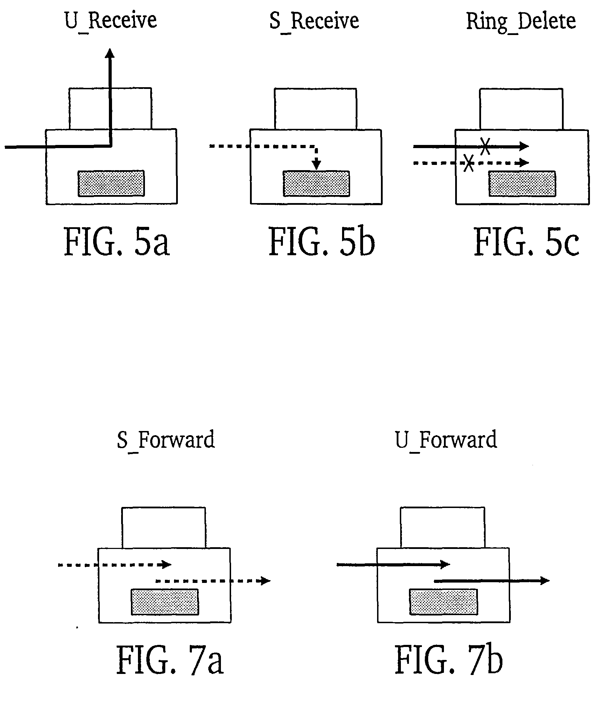

Die Schaltmodi, welche in einer Tabelle in der Wegespeicheranordnung 13 speicherbar sind, sind in den Fig. 5a bis 5c dargestellt. Der Schaltmodus "U_Receive" in Fig. 5a ermöglicht die Weiterleitung von Zellen, die von der Funkschnittstelle eintreffen und zur Station geleitet werden. Bei allen Verbindungsarten (Unicast-, Multicast- und Broadcast-Verbindung), bei denen die Station der Empfänger ist, kann dieser Schaltmodus angewendet werden.

Fig. 5b zeigt der Schaltmodus "S_Receive", bei dem Kontrollzellen einer Punkt-zu-Punkt-, einer Punkt-zu-Multipunkt- oder Verteil-Verbindung von der Funkschnittstelle zur Netzwerkschnittstelle 6 geleitet werden und welche die Koppelvorrichtung 9 zur lokalen Steueranordnung 8 weitergibt. Beim Schaltmodus "Ring_Delete" gemäß Fig. 5c werden Anwender- oder Kontrollzellen in der Koppelvorrichtung 24 gelöscht, wenn diese nicht zur Station 5 oder zur lokalen Steueranordnung 8 gelangen sollen.

Die Wegespeicheranordnung 13 kann eine Tabelle mit den folgenden Einträgen aufweisen:

| Sendeort des/der Anwender | Verbindungsart | Schaltmodus |
|---|---|---|
| außerhalb des Terminals | alle/Anwenderzelle | U_Receive |
| außerhalb des Terminals | alle/Kontrollzelle | S_Receive |
| außerhalb des Terminals | alle nicht vorhandenen Verbindungen | Ring_Delete |

Wie oben schon zur anderen Tabelle erwähnt, weist die Tabelle auch hier nicht augelistete VPI- und VCI-Einträge für virtuelle Verbindungen auf. Die drei Schaltmodi beziehen sich jeweils auf alle Verbindungsarten (Unicast-, Multicast- und Broadcast-Verbindungen). Der den Zellstrom aussendende Anwender kann zu einer Station oder einer Steueranordnung eines anderen Terminals gehören.

In der Wegespeicheranordnung 13 können noch zwei weitere Schaltmodi aufgeführt sein, wenn das lokale Netzwerk mehrere Sub-Netzwerke enthält. In Fig. 6 ist ein Ausführungsbeispiel mit drei Sub-Netzwerken 26 bis 28 und Terminals 29 bis 41 dargestellt. Die Terminals 29 bis 34 sind Bestandteil des Sub-Netzwerkes 26, die Terminals 32 und 35 bis 38 sind Bestandteil des Sub-Netzwerkes 27, und die Terminals 34 und 39 bis 41 sind Bestandteil des Sub-Netzwerkes 28. Die Terminals 32 und 34 sind Brücken-Terminals welche jeweils zu zwei Sub-Netzwerken gehören und über die Verbindungen zwischen den beiden Sub-Netzwerken laufen. Es kann in den Brücken-Terminals jeweils eine Veränderung der einer virtuellen Verbindung zugeordneten Nummer, welche zusammen durch VPI und VCI gekennzeichnet ist, vorgenommen werden. Ohne solche Brücken-Terminals 32 und 34 könnte beispielsweise eine Verbindung zwischen Anwendern der Terminals 29 und 40 in den Sub-Netzwerken 26 und 28 nicht durchgeführt werden.

Die beiden oben erwähnten zusätzlichen in der Wegespeicheranordnung 13 ablegbaren Schaltmodi sind in den Fig. 7a und 7b dargestellt. Der Schaltmodus "S_Forward" gemäß Fig. 7a gibt die Umsetzung der Nummer der virtuellen Verbindung in der Netzwerkschnittstelle eines Brücken-Terminals für eine Kontrollzelle an. Die Fig. 7b zeigt den Schaltmodus "U_Forward", bei dem die Nummer der virtuellen Verbindung einer Anwenderzelle umgesetzt wird. Die oben für eine Wegespeicheranordnung 13 aufgelistete Tabelle weist weitere Einträge auf, wenn die Wegespeicheranordnung 13 Bestandteil eines Brücken-Terminals ist.

| Sendeort des/der Anwender | Empfangsort des/der Anwender | Verbindungsart | Schaltmodus |
|---|---|---|---|
| außerhalb des Terminals | Terminal selbst | alle/Anwenderzelle | U_Receive |
| außerhalb des Terminals | Terminal selbst | alle/Kontrollzelle | S_Receive |
| außerhalb des Terminals | nächstes Sub-Netzwerk | alle/Anwenderzelle | U_Forward mit Umsetzung |
| außerhalb des Terminals | nächstes Sub-Netzwerk | alle/Anwenderzelle | S_Forward mit Umsetzung |
| außerhalb des Terminals | irrelevant | alle nicht vorhandenen Verbindungen | Ring_Delete |

In der Tabelle ist zusätzlich noch der Empfangsort eines oder mehrerer Anwender enthalten. Bei den Schaltmodi "U_Receive" und "S_Receive" ist der Empfangsort das Terminal selbst, welches die Schaltoperation mittels der in seiner Netwerkschnittstelle 6 enthaltenen Koppelvorrichtung 9 durchführt. Die zusätzlichen Schaltmodi "U_Forward" und "S_Forward" betreffen Zellen, welche in ein anderes Sub-Netzwerk übertragen werden sollen. Hierbei wird dann jeweils die zusammen durch den VPI und VCI festgelegte Nummer in der Empfangsschaltung 15 verändert (VPI/VCI-Umsetzung).

## Patentansprüche

1. Lokales, nach dem asynchronen Transfermodus arbeitendes Netzwerk mit mehreren Terminals (1 bis 4), die jeweils eine Station (5), eine Funkvorrichtung (7) zur Übertragung von Daten zwischen den Terminals (1 bis 4) und eine Netzwerkschnittstelle (6) mit einer wenigstens zum Verbindungsaufbau vorgesehenen Steueranordnung (8) und mit einer Koppelvorrichtung (9) zur Vermittlung von Zellen zwischen Funkvorrichtung (7), Station (5) und Steueranordnung (8) enthalten,
dadurch gekennzeichnet,
daß die Terminals (1 bis 4) jeweils zum direkten Datenaustausch mit einem anderen Terminal (1 bis 4) vorgesehen sind und
daß ein Terminal (1 bis 4) zur Durchführung von Managmentfunktionen im Netzwerk und zum Austausch von Daten mittels wenigstens einer virtuellen Verbindung zwischen einem lokalen Anwender und einem Anwender eines anderen Terminals (1 bis 4) vorgesehen ist.

2. Lokales Netzwerk nach Anspruch 1,
dadurch gekennzeichnet,
daß das Netzwerk mehrere Sub-Netzwerke (26 bis 28) mit jeweils mehreren Terminals (29 bis 41) enthält und
daß wenigstens ein Terminal (32, 34) Bestandteil von zwei angrenzenden Sub-Netzwerken (26 bis 28) ist und zur Übertragung von Zellen zwischen den Sub-Netzwerken (26 bis 28) vorgesehen ist.

3. Lokales Netzwerk nach Anspruch 1 oder 2,
dadurch gekennzeichnet,
daß in der Koppelvorrichtung (9) eine einem Ausgangsanschluß (17) der Station (5) zugeordnete erste Empfangsschaltung (16), welche mit einer ersten Wegespeicheranordnung (14) gekoppelt ist und eine einem Empfangsanschluß (11) der Netzwerkschnittstelle (6) zugeordnete zweite Empfangsschaltung (15), welche mit einer zweiten Wegespeicheranordnung (13) gekoppelt ist, enthalten ist,
daß jede Empfangsschaltung (15, 16) zur Auswertung des Kopffeldes einer empfangenen Zelle vorgesehen ist und
daß zumindestens anhand der aus der Kopfzelle gewonnenen Information eine Empfangsschaltung (15, 16) zur Entnahme eines Schaltmodus aus der zugeordneten Wegespeicheranordnung (13, 14) vorgesehen ist.

4. Lokales Netzwerk nach Anspruch 3,
dadurch gekennzeichnet,
daß die erste Wegespeicheranordnung (14) zur Speicherung
- eines ersten Schaltmodus für eine Verbindung von der Station (5) zurück zur Station (5) vorgesehen ist, bei dem die Koppelvorrichtung (9) den Ausgangs- und Eingangsanschluß (18, 17) der Station (5) koppelt,
- eines zweiten Schaltmodus für eine Verbindung von der Station (5) zurück zur Station (5) und von der Station (5) zu einem anderen Terminal (1 bis 4) vorgesehen ist, bei dem die Koppelvorrichtung (9) den Ausgangsanschluß (17) der Station (5) mit dem Eingangsanschluß (18) der Station (5) und mit dem Sendeanschluß (10) der Netzwerkschnittstelle (6) koppelt,
- eines dritten Schaltmodus für eine Verbindung zwischen der Station (5) und wenigstens einem anderen Terminal (1 bis 4) vorgesehen ist, bei dem die Koppelvorrichtung (9) den Ausgangsanschluß (17) der Station (5) mit dem Sendeanschluß (10) der Netzwerkschnittstelle (6) koppelt,
- eines vierten Schaltmodus für eine Verbindung zwischen der Station (5) und der lokalen Steueranordnung (8) vorgesehen ist, bei dem die Koppelvorrichtung (9) den Ausgangsanschluß (17) der Station (5) mit der lokalen Steueranordnung (8) koppelt,
- eines fünften Schaltmodus für eine Verbindung zwischen der Station (5) und der lokalen und wenigstens einer Steueranordnung (8) eines anderen Terminals (1 bis 4) vorgesehen ist, bei dem die Koppelvorrichtung (9) den Ausgangsanschluß (17) der Station (5) mit der lokalen Steueranordnung (8) und dem Sendeanschluß (10) der Netzwerkschnittstelle (6) koppelt und
- eines sechsten Schaltmodus zum Löschen von von der Station (5) eintreffenden Zellen mit nicht vorhandenen Verbindungen vorgesehen ist.

5. Lokales Netzwerk nach Anspruch 3 oder 4,
dadurch gekennzeichnet,
daß die zweite Wegespeicheranordnung (13) zur Speicherung
- eines siebten Schaltmodus für eine Verbindung von der Funkschnittstelle zur Station (5) vorgesehen ist, bei dem die Koppelvorrichtung (9) den Empfangsanschluß (11) der Netzwerkschnittstelle (6) mit dem Eingangsanschluß (18) der Station (5) koppelt,
- eines achten Schaltmodus für eine Verbindung zwischen der Funkschnittstelle und der lokalen Steueranordnung (8) vorgesehen ist, bei dem die Koppelvorrichtung (9) den Empfangsanschluß (11) der Netzwerkschnittstelle (6) mit der lokalen Steueranordnung (8) koppelt, und
- eines neunten Schaltmodus zum Löschen von von dem Empfangsanschluß (11) der Netzwerkschnittstelle (6) eintreffenden Zellen mit nicht vorhandenen Verbindungen vorgesehen ist.

6. Lokales Netzwerk nach Anspruch 5,
dadurch gekennzeichnet,
daß die zweite Wegespeicheranordnung (13) in einem Terminal (1 bis 4), welches Bestandteil von wenigstens zwei angrenzenden Sub-Netzwerken (26 bis 28) ist, zusätzlich zur Speicherung
- eines zehnten Schaltmodus für eine Verbindung zwischen einem Terminal (32, 34) eines ersten Sub-Netzwerkes (26 bis 28) und einem Terminal (32, 34) eines zweiten Sub-Netzwerkes (26 bis 28) vorgesehen ist, bei dem die Koppelvorrichtung (9) den Empfangs- und Sendeanschluß (11, 10) der Netzwerkschnittstelle (6) koppelt.

7. Lokales Netzwerk nach Anspruch 6,
dadurch gekennzeichnet,
daß bei einem Verbindungsaufbau die Steueranordnung (8) zur Speicherung des zur virtuellen Verbindung gehörenden Schaltmodus in wenigstens einer Wegespeicheranordnung (13, 14) vorgesehen ist.

8. Lokales Netzwerk nach Anspruch 7,
dadurch gekennzeichnet,
daß die im Kopffeld einer Zelle enthaltenen VCI (virtual channel identifier) und VPI (virtual path identifier) zusammen zur Kennzeichnung einer virtuellen Verbindung vorgesehen sind und
daß die Wegespeicheranordnung (13, 14) wenigstens zur Speicherung der Verbindungsart, des Zelltyps und des Schaltmodus unter dieser Kennzeichnung vorgesehen sind.

9. Lokales Netzwerk nach einem der Ansprüche 1 bis 8,
dadurch gekennzeichnet,
daß ein Terminal (1 bis 4) eine Funkvorrichtung (7) mit einer Hochfrequenzschaltung (20), einem Modem (21) und einer Protokollvorrichtung (22) enthält,
daß die Funkvorrichtungen (7) von zwei Terminals (1 bis 4) zum Austausch von Daten vorgesehen sind,
daß ein Terminal (1 bis 4) zum Austausch von Identifikationsdaten über einen Registrierungskanal, von MAC-Signalisierungsdaten (MAC = medium access control) über einen MAC-Signalisierungskanal und von Nutzinformationen über wenigstens einen Transportkanal vorgesehen ist und
daß die Nutzinformationen wenigstens einen Teil einer Zelle enthalten.

10. Lokales Netzwerk nach Anspruch 9,
dadurch gekennzeichnet,
daß das zur Durchführung von Managementfunktionen vorgesehene Terminal (1 bis 4) zur Steuerung des Verbindungsaufbaus und -abbaus und zur dynamischen Zuweisung von Transportkanälen für die einzelnen Terminals (1 bis 4) vorgesehen ist.

11. Terminal (1 bis 4) für ein lokales, nach dem asynchronen Transfermodus arbeitendes Netzwerk mit mehreren weiteren Terminals (1 bis 4), das eine Station (5), eine Funkvorrichtung (7) zur Übertragung von Daten mit anderen Terminals (1 bis 4) und eine Netzwerkschnittstelle (6) mit einer wenigstens zum Verbindungsaufbau vorgesehenen Steueranordnung (8) und mit einer Koppelvorrichtung (9) zur Vermittlung von Zellen zwischen Funkvorrichtung (7), Station (5) und Steueranordnung (8) enthält,
dadurch gekennzeichnet,
daß das Terminals (1 bis 4) zum direkten Datenaustausch mit einem anderen Terminal (1 bis 4) vorgesehen ist und
daß das Terminal (1 bis 4) zur Durchführung von Managmentfunktionen im Netzwerk und zum Austausch von Daten mittels wenigstens einer virtuellen Verbindung zwischen einem eigenen Anwender und einem Anwender eines anderen Terminals (1 bis 4) vorgesehen ist.
